(19)

Europäisches
Patentamt
European
Patent Office
Office européen
des brevets

(11)  **EP 1 521 358 B1**

(12)  **EUROPEAN PATENT SPECIFICATION**

(45) Date of publication and mention
of the grant of the patent:
**15.06.2011   Bulletin 2011/24**

(51) Int Cl.:
***H02P 27/08*** (2006.01)   ***H02P 27/04*** (2006.01)

(21) Application number: **04023412.2**

(22) Date of filing: **01.10.2004**

(54) **Inverter controlling apparatus for driving motor**

Wechselrichteransteuervorrichtung für die Stromversorgung eines Motors

Appareil de commande d'un onduleur alimentant un moteur

(84) Designated Contracting States:
**ES FR IT**

(30) Priority: **03.10.2003   JP 2003345405**
**29.07.2004   JP 2004221346**

(43) Date of publication of application:
**06.04.2005   Bulletin 2005/14**

(73) Proprietor: **Panasonic Corporation**
**Kadoma-shi**
**Osaka 571-8501 (JP)**

(72) Inventors:
• **Kawaji, Mitsuo**
**Kusatsu-shi**
**Shiga 527-0058 (JP)**

• **Matsushiro, Hideo**
**Kusatsu-shi**
**Shifa 527-0072 (JP)**
• **Sugimoto, Tomohiro**
**Kusatsuh-shi**
**Shiga 527-0067 (JP)**

(74) Representative: **Eisenführ, Speiser & Partner**
**Postfach 31 02 60**
**80102 München (DE)**

(56) References cited:
**EP-A- 0 330 477     EP-A- 1 152 521**
**US-A- 5 481 451     US-B1- 6 313 602**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to an inverter controller for driving a motor by using a small capacity reactor and a small capacity condenser and an air conditioner employing same.

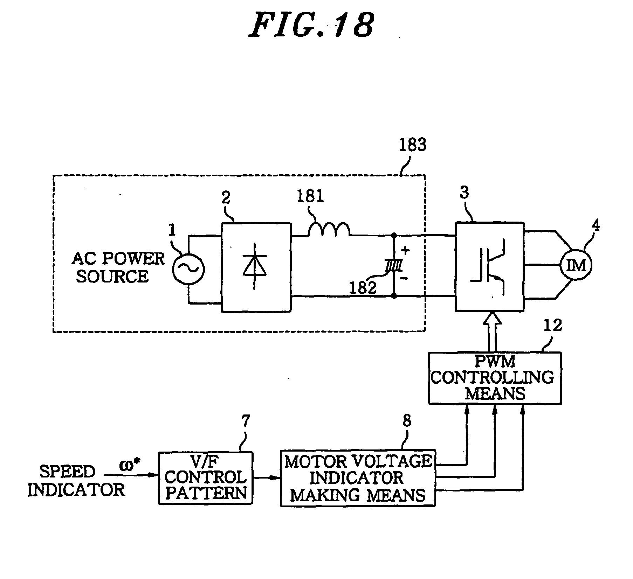

For an inverter controller for driving a motor which is generally used in a general-purpose inverter and the like, a V/F control typed inverter controller for driving a motor is well known (for example, referring to "Inverter drive handbook", pages 661 to 711, inverter drive handbook publication committee, first edition, 1995, issued by daily industrial paper company) as is shown in Fig. 18.

Referring to Fig. 18, a main circuit includes DC power source device 183, inverter 3 and inductance motor 4. DC power source device 183 includes AC power source 1, rectifying circuit 2, smoothing condenser 182 for accumulating an electrical energy as a DC voltage source of inverter 3 and reactor 181 for improving a power factor of AC power source 1.

Meanwhile, a control circuit includes V/F control pattern 7 which determines a motor voltage value applied to inductance motor 4 based on a speed indicator ω* of inductance motor 4 which is given from an outside thereof, motor voltage indicator making unit 8 which makes a motor voltage indicator of inductance motor 4 based on the motor voltage value determined by V/F control pattern 7, PWM control unit 12 for generating a PWM signal of inverter 3 based on the motor voltage indicator made by motor voltage indicator making unit 8.

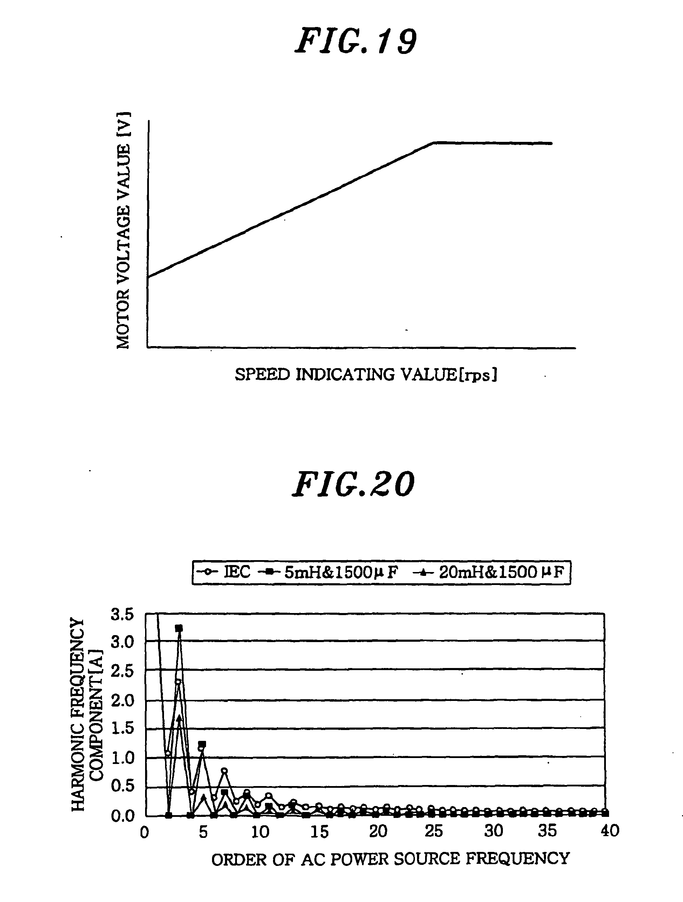

Herein, an example of general V/F control pattern 7 is described in Fig. 19.

As shown in Fig. 19, the motor voltage value applied to induction motor 4 is determined uniquely based on the speed indicator ω* . Generally, speed indicators ω* and corresponding motor voltage values are stored in a memory of a processing unit of computer as table values. Further, a motor voltage value corresponding to a speed indicator ω* other than those stored in the table is calculated by linearly interpolating values stored in the table.

Herein, when an output of AC power source 1 is 220 V (its AC power source frequency is 50 Hz), an input power of inverter 3 is 1.5 kW and a capacitance of smoothing condenser 182 is 1500 uF, a relation between a harmonic frequency component of the AC power source current and an order of an AC power source frequency is explained in Fig. 20, for the case that an inductance of the power factor improving reactor 181 is 5 mH or 20 mH. Fig. 20 shows the harmonic frequency component together with that of the International Electrotechnical Commission (IEC) specification, wherein, it is found that, in case an inductance of power factor improving reactor 181 is 5 mH, especially a third harmonic frequency component exceeds considerably that of the IEC specification, while those of the IEC specification are cleared by the harmonic frequency components of up to 40 orders in case the inductance of power factor improving reactor 181 is 20 mH.

Accordingly, an inductance value of power factor improving reactor 181 is needed to be increased for clearing the value of the IEC specification in case of a high loading, which requires a large size of an inverter controlling apparatus and further raises the cost to implement it.

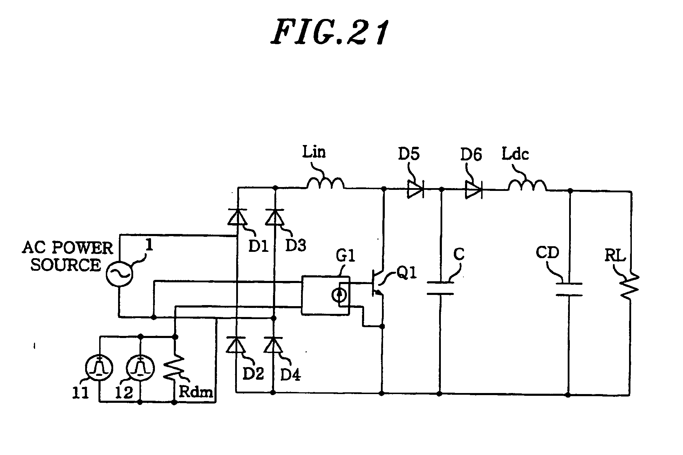

Therefore, as a DC power source device which achieves a reduction of the power source harmonic frequency component and a high power factor thereof, while suppressing an increase of the inductance value of power factor improving reactor 181, there has been proposed a DC power source device as shown in Fig. 21 (for example, refer to Japanese Patent Laid-Open Application No. H9-266674).

Referring to Fig. 21, an AC power source voltage of AC power source 1 is applied to an AC input terminal of a full wave rectifying circuit made by bridge-connecting diodes D1 to D4, an output thereof is charged to an intermediate condenser C via a reactor Lin, and finally a DC voltage is supplied to a load resistance RL by discharging a charge of the intermediate condenser C into a smoothing condenser CD. In this case, a transistor Q1 is connected into a DC current path of a central position that connects a load side of the reactor (Lin) and the intermediate condenser C, and the transistor Q1 is driven by a base driving circuit G1.

Further, pulse generating circuits 11 and 12 are provided with a dummy resistance Rdm, each including a circuit for detecting a zero crossing point of the AC power source voltage and a pulse current circuit for proving a pulse current to the dummy resistance Rdm until an instantaneous value of the AC power source voltage becomes equal to a voltage applied between two terminals of the intermediate condenser C from the detection of the zero crossing point.

Here, the pulse generating circuit 11 generates a pulse voltage during a first half of a half cycle of the AC power source voltage, and the pulse generating circuit 12 generates a pulse voltage during a second half of a half cycle of the AC power source voltage.

Further, when current is forced to flow into the reactor Lin by turning on the transistor Q1, a diode for preventing a backward flow is provided for preventing charge of the intermediate condenser C from being discharged through the transistor Q1. Furthermore, a diode D6 for preventing a backward flow and a reactor Ldc enhancing a smoothing effect are serially connected on a path where the charge of the intermediate condenser C is discharged into the smoothing condenser CD.

In accordance with the configuration described above, a reduction and a high power factor of the harmonic frequency component can be achieved, while miniaturizing the size of the apparatus, by turning on the transistor Q1 in a whole or partial phase range where the instantaneous value of the AC power source voltage does not exceed the voltage between two terminals of the intermediate condenser C.

However, the conventional configuration still includes the smoothing condenser CD having high capacitance and the reactor Lin (simulation results therefore are disclosed for the case of 1500 uF and 6.2 mH in Japanese Patent Laid-Open Application No. H9-266674), further includes the intermediate condenser C, the transistor Q1, the base driving circuit G1, the pulse generating circuits 11 and 12, the dummy resistance Rdm, the diodes D5 and D6 for preventing the backward flow and the reactor Lin enhancing the smoothing effect, thereby enhancing a size of the apparatus and increasing the number of the components included therein, which is accompanied by an increase of cost.

Document EP 1 152 521 A1 discloses an inverter controller, wherein a converter section thereof connected to a commercial AC voltage power supply network includes a rectifying circuit in the form of a diode bridge. The output terminals of the converter section are connected to the input terminals of an inverter section supplying to a load device in the form of an electric motor an AC voltage derived from the input DC voltage from the converter section. Based on a reference voltage input an arithmetic processing section performs the control of the inverter section and the generation of the AC voltage in further consideration of the value of a DC voltage supplied from the converter section to the inverter section. The detected voltage constitutes an instantaneous DC voltage, and control is further obtained to maintain the output AC voltage of the inverter section at a desired value following the variation in the detected instantaneous DC voltage.

Moreover, document US 6 313 602 B1 discloses a Modified Space Vector Pulse Width Modulation Technique to reduce DC bus ripple effect in voltage source inverters, wherein a multi-phase inverter is connected between a single phase AC power supply network and a load provided in the form of an AC induction motor. Drive signals of a bridge rectifier circuit are generated by a controller based on a feed-back scheme, and the drive concept provides ripple voltage cancellation in a lightly filtered line voltage node. The concept allows the reduction of the extensive and large size capacitor which is normally required for filtering ripples on the DC bus voltage line. Specifically, instantaneous pulse width modulation drive is calculated based on corresponding measured voltage ripples, and specifically respective duty-cycle ratios for the different phases are calculated, and the corrected pulse width modulation drive is fed to the multi-phase bridge rectifier circuits on the basis of which the motor is supplied the required AC power in view of the desired motor drive applications. Ripple effects are reduced for a given capacitor size.

It is, therefore, an object of the present invention to provide an inverter controlling apparatus for driving a motor and an air conditioner using the same which minimizes a size and a weight thereof and lowers cost by reducing an amount of a motor current variation.

In accordance with one aspect of the invention, there is provided an inverter controlling apparatus for driving a motor including: a rectifying circuit having an AC electrical source as an input; an inverter for converting from a DC electric power to an AC electric power; and a motor, wherein the rectifying circuit includes a diode bridge; a small capacity reactor connected to the DC input or the AC input of the diode bridge; a small capacity condenser for absorbing a revival energy of the motor between base lines of the inverter; a speed indicating value correcting means for making a correcting speed indicating value by overlapping a speed component which varies periodically to a speed indicating value supplied from outside; a motor voltage indicator making means for making a motor voltage indicating value of the motor, based on the corrected speed indicating value; a PN detecting means for detecting a DC voltage of the inverter; a PN voltage correcting means for obtaining a ratio between a pre-determined DC voltage reference value of the motor and a detected DC voltage value of the inverter from the PN voltage detecting means; and a motor voltage indicator correcting means for making the corrected motor voltage indicating value of the motor by performing a voltage correction of the motor voltage indicating value by multiplying the motor voltage indicating value from the motor voltage indicator making means with a PN voltage correction coefficient which is an output value of the PN voltage correcting means.

In accordance with the above-described structure, the inverter controlling apparatus for driving a motor having a small size, light mass and cost effectiveness can be implemented by using the small capacity reactor and the small condenser. Further, even when it is difficult or impossible to drive the motor due to large variation of the inverter DC voltage, the motor can be driven constantly by almost fixing the voltage applied to the motor by the PN voltage correcting means. Furthermore, by changing the speed indicating value of the motor periodically by the speed indicator correcting means, a variation period of the motor current is changed and the variation value of the motor current is reduced, and it is possible to achieve a small size, light mass and cost effectiveness of the inverter controlling apparatus for driving the motor by reduction of loss or current capacity of the component.

In accordance with the present invention, by reducing the variation value of the motor current, the inverter controlling apparatus for driving the motor and the air conditioner using thereof which achieves the small size, light mass and cost effectiveness can be provided.

The above and other objects and features of the present invention will become apparent from the following description of preferred embodiments, given in conjunction with the accompanying drawings, in which:

Fig. 1 shows a system configuration of an inverter controlling apparatus for driving a motor in accordance with a first embodiment of the present invention;

Fig. 2 illustrates a characteristic graph showing the first embodiment of a speed indicator correcting means in accordance with the present invention;

Fig. 3 depicts a characteristic graph showing a second embodiment of the speed indicator correcting means in accordance with the present invention;

Fig. 4 provides a characteristic graph showing a third embodiment of the speed indicator correcting means in accordance with the present invention;

Fig. 5 provides a characteristic graph showing a fourth embodiment of the speed indicator correcting means in accordance with the present invention;

Fig. 6 represents a characteristic graph showing conversion of the corrected speed indicating value in the speed indicator correcting means in accordance with the present invention;

Fig. 7 offers characteristic graph showing the first embodiment of the speed indicator converting means in accordance with the present invention;

Fig. 8 represents characteristic graph showing the second embodiment of the speed indicator converting means in accordance with the present invention;

Fig. 9 depicts characteristic graph showing the first embodiment of the PN voltage correcting means in accordance with the present invention;

Fig. 10 offers characteristic graph showing a first operation result of the inverter controlling apparatus for driving the motor in accordance with the present invention;

Fig. 11 presents characteristic graph showing a second operation result of the inverter controlling apparatus for driving the motor in accordance with the present invention;

Fig. 12 shows characteristic graph showing a third operation result of the inverter controlling apparatus for driving the motor in accordance with the present invention;

Fig. 13 offers characteristic graph showing a fourth operation result of the inverter controlling apparatus for driving the motor in accordance with the present invention;

Fig. 14 illustrates characteristic graph showing a fifth operation result of the inverter controlling apparatus for driving the motor in accordance with the present invention;

Fig. 15 represents characteristic graph showing a sixth operation result of the inverter controlling apparatus for driving the motor in accordance with the present invention;

Fig. 16 offers characteristic graph showing a seventh operation result of the inverter controlling apparatus for driving the motor in accordance with the present invention;

Fig. 17 presents characteristic graph showing a eighth operation result of the inverter controlling apparatus for driving the motor in accordance with the present invention;

Fig. 18 shows system configuration of the conventional inverter controlling apparatus for driving the motor;

Fig. 19 illustrates characteristic graph showing an example of the conventional V/F controlling pattern;

Fig. 20 shows characteristic graph showing a relation between a harmonized frequency component of the AC electrical source current and the degree of the AC electrical source frequency in the conventional inverter controlling apparatus for driving the motor; and

Fig. 21 shows the block diagram of the conventional DC electrical source apparatus.

Hereinafter, there will now be described preferred embodiments of the present invention with reference to the drawings. In the embodiments to be described later, descriptions will be given with respect to an inverter controlling apparatus for driving an induction motor, however, the embodiments of the present invention may be applied to inverter controlling apparatuses for driving a motor, other than an inverter controlling apparatus for driving an induction motor.

(Embodiment 1)

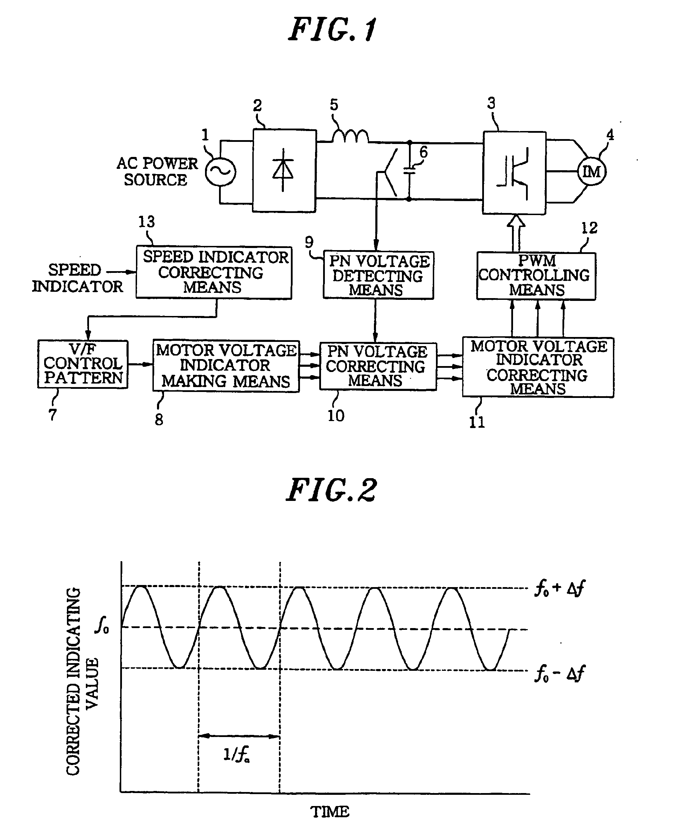

Fig. 1 shows a block diagram of the inverter controlling apparatus for driving a motor in accordance with the first embodiment of the present invention. Referring to Fig. 1, a main circuit includes AC power source 1, diode bridge 2 for converting AC electric power to DC electric power, small inductance reactor 5, small capacitance condenser 6, inverter 3 for transforming a DC electric power to an AC electric power, and induction motor 4 driven by the AC electric power transformed by inverter 3.

Meanwhile, a controlling circuit includes a speed indicating value correcting means for making a corrected speed indicating value of induction motor 4 by overlapping a speed component which varies periodically with respect to a speed indicating value $\omega^*$ of induction motor 4 supplied from an outside thereof; V/F controlling pattern 7 for determining a motor voltage value applied to induction motor 4 based on the corrected speed indicating value from speed indicating correcting means 13; motor voltage making means 8 for making the motor voltage indicating value of induction motor 4 based on the motor voltage indicating value determined by V/F controlling pattern 7; PN voltage detecting means 9 for detecting an AC voltage of inverter 3; PN voltage correcting means 10 for calculating a ratio of a pre-determined DC voltage reference value of inverter 3 and the DC voltage value of inverter 3 detected by PN voltage detecting means 9; and motor voltage indicator correcting means 11 for making the corrected motor voltage indicating value of induction motor 4 by performing a correction of the motor voltage indicating value by multiplying the motor voltage indicating value from motor voltage indicator making means 8 by a PN voltage correction coefficient which is an output value of PN voltage correcting means 10; and PWM controlling means 12 for generating a PWM signal of inverter 3 based on the motor voltage indicator correction value from motor voltage indicating correcting means 11.

Herein, since V/F controlling pattern 7 is described in the previously mentioned prior art documents, a description thereof will be omitted. (V/F control typed inverter controlling apparatus for driving a motor shown in Fig. 18)

Hereinafter, a detailed operation of the apparatus will be explained.

Fig. 2 shows a first embodiment of the speed indicator correcting means 13 in accordance with the present invention, wherein, for a speed indicator $\omega^*$ (= $2\pi f_0$ ), if a variation width of a speed component which is periodically changed is $\Delta f$, a variation frequency (reciprocal number of a variation period) is $f_\alpha$, an initial value is $\beta_0$, then a corrected speed indicating value $\overset{\bullet}{\omega_h^*}$ is obtained by an operation shown in Eq. 1.

$$\overset{\bullet}{\omega_{h^*}} = \omega^* + 2\pi\Delta f \cdot \sin(2\pi f_\alpha t + \beta_0) \qquad \text{Eq. 1}$$

Where the variation width $\Delta f$, the variation frequency $f_\alpha$ and the initial value $\beta_0$ are preferably determined by a simulation or an experiment in advance such that the effect of reducing a variation of a motor current is minimized.

Further, the motor voltage indicator writing means 8 calculates motor voltage indicators $\overset{\bullet}{v_u^*}, \overset{\bullet}{v_v^*}$ and $\overset{\bullet}{v_w^*}$ by using Eq. 2.

$$\begin{cases} \overset{\bullet}{v_u^*} = V_{mh} \sin\theta_{1h} \\ \overset{\bullet}{v_v^*} = V_{mh} \sin(\theta_{1h} - 2\pi/3) \\ \overset{\bullet}{v_w^*} = V_{mh} \sin(\theta_{1h} + 2\pi/3) \end{cases} \qquad \text{Eq. 2}$$

Where $V_{mh}$ is a motor voltage value determined by V/F controlling pattern 7 based on the corrected speed indicating value $\overset{\bullet}{\omega_h^*}$, and both the motor voltage value $V_{mh}$ and a current applying phase angle $\theta_{1h}$ come to vary periodically, since the current applying phase angle $\theta_{1h}$ is obtained by integrating the corrected speed indicating value $\overset{\bullet}{\omega_h^*}$ along time as shown in Eq. 3.

Further, the motor voltage indicating values $\overset{\bullet}{v_u^*}, \overset{\bullet}{v_v^*}$ and $\overset{\bullet}{v_w^*}$ do not have to be obtained from the Eq. 2 (i.e., both the motor voltage value $V_{mh}$ and the current applying phase angle $\theta_{1h}$ do not have to vary periodically), and only the current applying phase angle $\theta_{1h}$ may be periodically varied. In this case, the motor voltage indicators $\overset{\bullet}{v_u^*}, \overset{\bullet}{v_v^*}$ and $\overset{\bullet}{v_w^*}$ can be obtained by using a motor voltage value $V_m$ that is determined by V/F controlling pattern 7 based on the speed indicator $\omega^*$, instead of the motor voltage value $V_{mh}$.

$$\omega_{1h} = \int \overset{\bullet}{\omega_h^*} dt \qquad \text{Eq. 3}$$

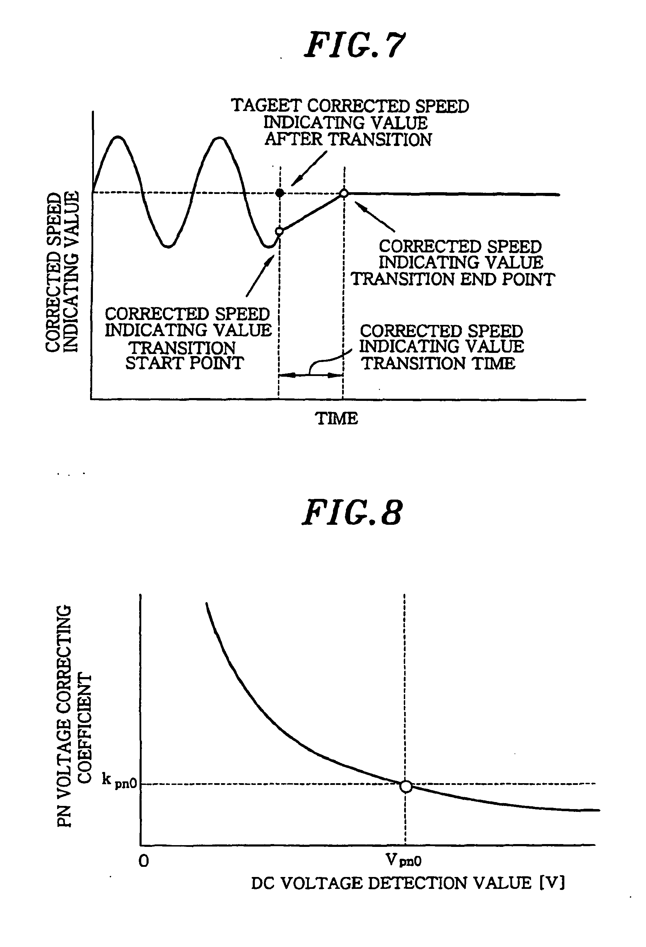

Further, Fig. 8 shows a first embodiment of PN voltage correcting means 10 in accordance with the present invention, wherein a PN voltage correcting coefficient $k_{pn}$ is obtained by using a DC voltage detecting value $V_{pn}$ of the inverter 3 from PN voltage detecting means 9 and a predetermined DC voltage reference value $V_{pn0}$ of inverter 3, in PN voltage correcting means 10, as shown in Eq. 4.

$$k_{pn} = \frac{V_{pn0}}{v_{pn} + \delta_0}$$

Eq. 4

Herein, since the present invention employs a small capacitance condenser, there may occur a case that the DC voltage detecting value $V_{pn}$ becomes zero, a minuteness term $\delta_0$ should be included therein to prevent a denominator from being zero.

Further, in addition to using the minuteness term $\delta_0$ of the Eq. 4, the PN voltage correcting coefficient $k_{pn}$ may be set to be a predetermined maximum value thereof in case that the DC voltage detecting value $V_{pn}$ is less than or equal to zero, thereby preventing the denominator from being zero.

In other words, the PN voltage correcting coefficient $k_{pn}$ may be obtained by using Eq. 5, which is given by

$$k_{pn} = \begin{cases} k_{pn\_max} \ (v_{pn} \leq 0) \\ V_{pn0}/v_{pn} \ (v_{pn} > 0) \end{cases}$$

Eq. 5

where $k_{pn\_max}$ is the predetermined maximum value of the PN voltage correcting coefficient.

Further, motor voltage indicator correcting means 11 outputs the motor voltage indicator correcting value $\overset{\bullet}{v}_{uh}, \overset{\bullet}{v}_{vh}$ and $\overset{\bullet}{v}_{wh}$ by using the motor voltage indicating values $\overset{\bullet}{v}_{u}, \overset{\bullet}{v}_{v}$ and $\overset{\bullet}{v}_{w}$, and the PN voltage correcting coefficient $k_{pn}$, as shown in Eq. 6.

$$\begin{cases} \overset{\bullet}{v}_{uh} = k_{pn} \cdot \overset{\bullet}{v}_{u} \\ \overset{\bullet}{v}_{vh} = k_{pn} \cdot \overset{\bullet}{v}_{v} \\ \overset{\bullet}{v}_{wh} = k_{pn} \cdot \overset{\bullet}{v}_{w} \end{cases}$$

Eq. 6

In this way, an inverter controlling apparatus for driving a motor, having a small size and a light weight can be implemented in low cost by using the small capacity reactor and the small condenser. Further, even in case it is difficult or impossible to operate the motor due to a large variation of the inverter DC voltage, the motor can operate stably by keeping almost constant the voltage applied to the motor by the PN voltage correcting means. Furthermore, by changing periodically the speed indicating value of the motor by the speed indicator correcting means, a variation period of the motor current is changed and a variation amount of the motor current is reduced and, thus, it is possible to implement in low cost the inverter controlling apparatus for driving a motor, having a small size and a light weight, by reducing a loss or current capacitance of components thereof.

Further, the present invention may be applied not only to the inverter controlling apparatus for driving the motor employing the V/F control as described in the above embodiments, but also to an inverter controlling apparatus for driving a motor employing a well-known vector control.

Furthermore, the present invention can be applied to an air conditioner either in the case a speed sensor such as a pulse generator cannot be used, e.g., as in a compressor driving motor or in case the speed sensor can be provided, e.g., as in a servo drive.

(Embodiment 2)

There will now be described on a detailed operation of another embodiment of the speed indicator correcting means in accordance with the present invention.

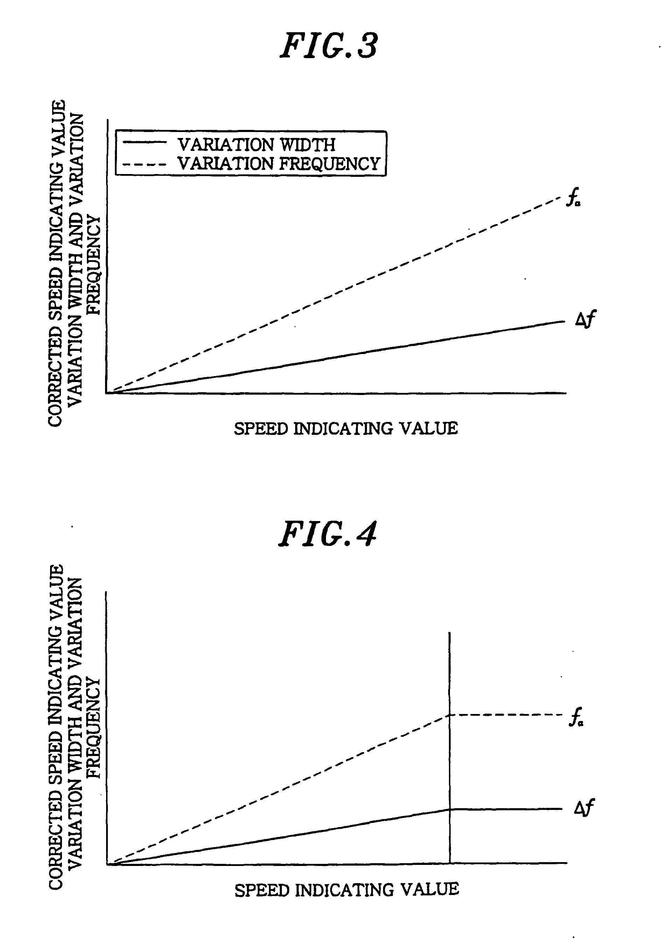

A second embodiment of the present invention is illustrated in Fig. 3. Referring to Fig. 3, a variation width $\Delta f$ of a corrected speed indicating value and a variation frequency $f_\alpha$ is proportional to a speed indicating value.

However, both the variation width $\Delta f$ of the corrected speed indicating value and the variation frequency $f_\alpha$ are not necessarily proportional to the speed indicating value, that is, only one of the both values may be proportional to the speed indicating value according to operational circumstances.

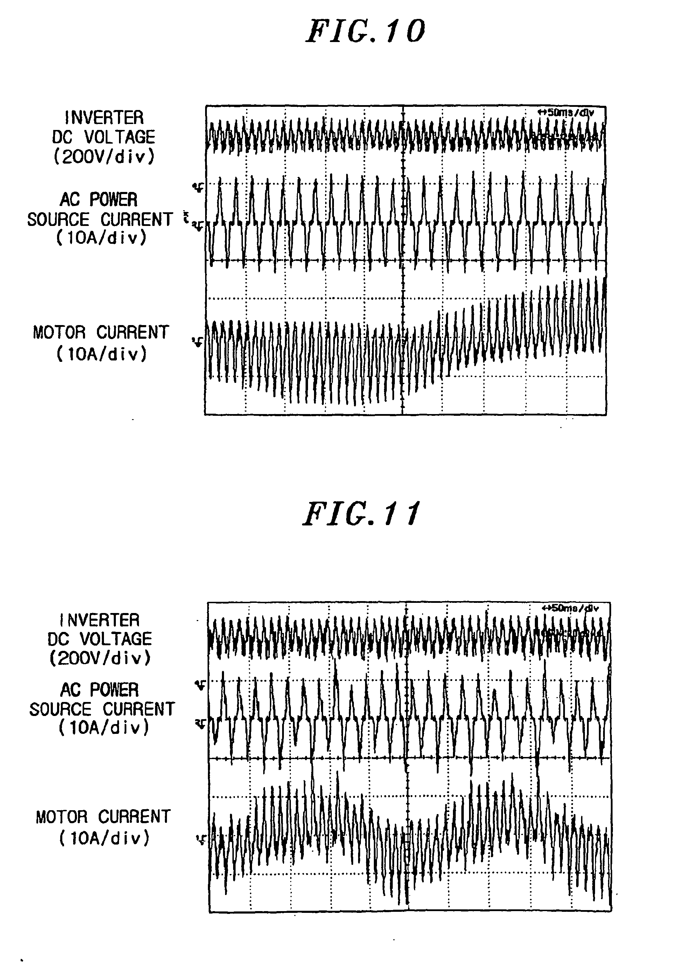

Fig. 10 shows a result of an operation of the inverter controlling apparatus of the present invention, in case the speed indicating value is not varied periodically, and Fig. 11 presents a result of an operation of the apparatus wherein the speed indicator correcting means of Fig. 3 is employed (i.e., both the variation width $\Delta f$ of the corrected speed indicating value and the variation frequency $f_\alpha$ are proportional to the speed indicating value). Compared with Fig. 10, Fig. 11 shows that the variation period of the motor current is changed and thus the variation amount thereof is reduced.

In the experiment the result of which are shown in Figs. 10 and 11: an AC power source was set to 220 V (AC power source frequency of 50 Hz); an inductance of the small capacity reactor, 0.5 mH; a capacitance of the small capacity condenser, 10 uF; an inverter driving frequency, 98 Hz; and an inverter carrier frequency, 5 kHz.

In this way, by reducing the variation of the motor current by changing the variation period thereof, it is possible to implement in low cost the inverter controlling apparatus for driving a motor, having a small size and a light weight, by reducing a loss or current capacitance of components thereof.

Particularly, since a ratio of the variation width $\Delta f$ to the speed indicating value of the motor is maintained to be uniform over an entire operation range in case the variation width $\Delta f$ is proportional to the speed indicating value, the variation of the motor current can be reduced effectively by changing the variation period of the motor current at any point of the operation range, in case a load torque increases in proportion to the speed indicating value.

Further, since a ratio of the variation period to the speed indicating value of the motor is kept uniform over an entire operation range in case the variation frequency $f_\alpha$ of the speed indicating value is proportional to the speed indicating value, the variation of the motor current can be reduced effectively by changing the variation period of the motor current especially in high speed range.

Fig. 4 shows a third embodiment of the speed indicator correcting means in accordance with the present invention. Fig. 4 shows an output of the speed indicator correcting means of Fig. 3, which is limited by an upper limit value, i.e., the variation width $\Delta f$ and the variation frequency $f_\alpha$ of the corrected speed indicating value are made constant in a high speed area where the speed indicating value is greater or equal to a predetermined speed $f_R$.

Here, the corrected speed indicating value may be limited by not only the upper limit value, but also by a lower limit value (or only by the lower limit value) depending on an operational environment.

It is not necessary to limit both the variation width $\Delta f$ of the corrected speed indicating value and the variation frequency $f_\alpha$ thereof, only one of which may be limited depending on the operation environment. In this way, since the variation width $\Delta f$ of the corrected speed indicating value is limited, it is suppressed to excessively change the speed indicating value of the motor especially under high speed and light load condition. Thus, it is possible to operate stably the motor under high speed and light load condition.

Further, since the variation frequency $f_\alpha$ of the corrected speed indicating value is limited, it is suppressed to excessively change the speed indicating value of the motor especially in a high speed range. In such a way, it is possible to operate the motor in a high speed range.

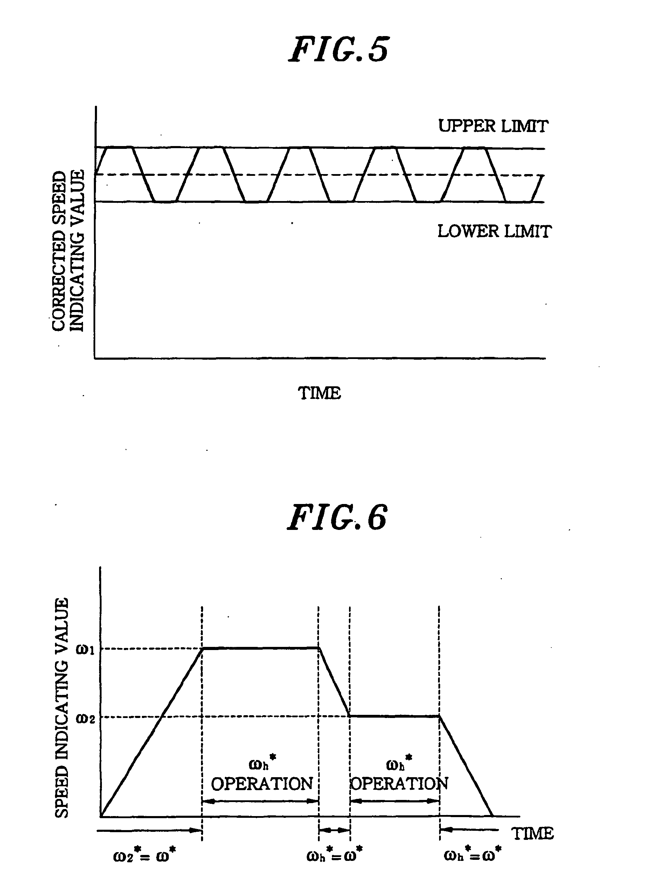

Next, a fourth embodiment of the speed indicator correcting means in accordance with the present invention is shown in Fig. 5. In Fig. 5, an output of the speed indicator correcting means of Fig. 2 is limited by an upper and a lower limit value. While the speed indicating value is varying in a shape of sine wave in Fig. 2, the speed indicating value in Fig. 5 is modified to a trapezoidal shape by the upper and the lower limit values.

Although the speed indicating correcting value is limited by the upper and the lower limit values, it is not necessary to limit both of them, however, only one of them may be limited.

In accordance with the aforementioned configuration, it is suppressed to excessively change the speed indicating value of the motor, allowing a stable operation of the motor. Further, since a variation of the speed indicating value is adjustable based on the predetermined upper or the lower limit values, a reduction of loss or current capacitance of components can be facilitated by reducing a variation of the motor current.

(Embodiment 3)

In the ensuing discussion, there will be described a method of converting a corrected speed indicating value in the speed indicator correcting means in accordance with the present invention.

The speed indicator correcting means has a preset value $\omega_{ch}$ of the speed indicating value $\omega^*$ and, only if the speed indicating value $\omega^*$ is larger than the preset value $\omega_{ch}$, outputs corrected speed indicating value $\overset{\bullet}{\omega_h^*}$. Otherwise, i.e., if the speed indicating value $\omega^*$ is not larger than the preset value $\omega_{ch}$, the corrected speed indicating value $\overset{\bullet}{\omega_h^*}$ is set to be the speed indicating value $\omega^*$.

In other word, the corrected speed indicating value $\overset{\bullet}{\omega_h^*}$ is represented by,

$$\omega_h^{\bullet} = \begin{cases} \omega^{\bullet} + 2\pi\Delta f \cdot \sin(2\pi f_\alpha t + \beta_o)(\omega^{\bullet} > \omega_{ch}) \\ \omega^{\bullet}(\omega^{\bullet} \le \omega_{ch}) \end{cases} \qquad \text{Eq. 7}$$

In accordance with the above-described method, a variation of the motor current is effectively reduced by periodically changing the speed indicating value of the motor only if the speed indicating value of the motor is larger than a predetermined value. Therefore, a cost reduction can be achieved by reducing a size of a memory and a computational load of an operation unit such as a microcomputer.

Further, the speed indicator correcting means calculates the corrected speed indicating value ω $\omega_h^{\bullet}$ only if the speed indicating value becomes constant and, otherwise the speed indicating value ω* is set to be the corrected speed indicating value $\omega_h^{\bullet}$. Fig. 6 explains a transition of the corrected speed indicating value in the speed indicator correcting means in accordance with the present invention. Referring to Fig. 6, the speed indicating value ω* is increased (accelerated) from zero to $\omega_1$ , after a predetermined time has elapsed, decreased (decelerated) from $\omega_1$ to $\omega_2$ , and further decreased from $\omega_2$ to zero after another predetermined time has passed.

Accordingly, when the motor accelerates or decelerates (i.e., when speed indicating value ω* is not constant), the corrected speed indicating value $\omega_h^{\bullet}$ is set to be the speed indicating value ω*.

By employing the above-described method, an unstable operation of the motor is prevented by not changing periodically the speed indicating value of the motor, in a transient state of accelerating or decelerating the motor, thereby facilitating a stable operating thereof.

Further, the speed indicator correcting means may include a speed indicator correction converting means having a hysteresis before and after converting the corrected speed indicating value $\omega_h^{\bullet}$ . A first embodiment of the speed indicator correction converting means in accordance with the present invention is shown in Fig. 7. Referring to Fig. 7, when the corrected speed indicating value $\omega_h^{\bullet}$ is converted from a state of varying periodically to a target value (i.e., the speed indicating value ω* in the inverter controlling apparatus for driving the motor in accordance with the present invention, as described above), if each value before and after the conversion is different from each other, the corrected speed indicating value $\omega_h^{\bullet}$ is rendered to approach the converted target value (the speed indicating value ω*) and the conversion is completed after both values are matched with each other to avoid the discontinuity.

Likewise, in case that the corrected speed indicating value $\omega_h^{\bullet}$ is converted from a constant value (the speed indicating value ω*) to the state of varying periodically, it is preferable to complete the conversion after both values before and after the conversion are matched with each other.

In accordance with the above-described method, a controlling stability and reliability is improved when converting the corrected speed indicating value, thereby being capable of suppressing a hunting caused by a fast change of the speed indicating value.

(Embodiment 4)

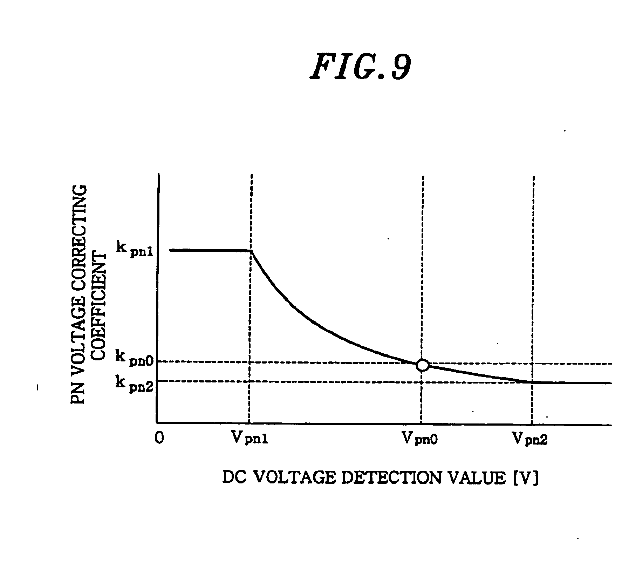

Fig. 9 shows a second embodiment of the PN voltage correcting means in accordance with the present invention. Referring to Fig. 9, the PN voltage correcting coefficient $k_{pn}$ has a predetermined upper limit $k_{pn1}$ and lower limit $k_{pn2}$, which is given by Eq. 8,

$$k_{pn} = \begin{cases} k_{pn1}(v_{pn} \le V_{pn1}) \\ V_{pn0}/v_{pn}(V_{pn1} < v_{pn} \le V_{pn2}) \\ k_{pn2}(v_{pn} > V_{pn2}) \end{cases} \qquad \text{Eq. 8}$$

Where $V_{pn1}$ and $V_{pn2}$ are detected DC voltage values for the upper limit $k_{pn1}$ and lower limit $k_{pn2}$ of the PN voltage correcting coefficient, respectively.

It is not necessary to limit the PN voltage correcting coefficient $k_{pn}$ by both the upper limit $k_{pn1}$ and the lower limit $k_{pn2}$, as shown in Fig. 9, by only one of which the PN voltage correcting coefficient $k_{pn}$ may be limited depending on the operational environment.

Further, in a conventional inverter controlling apparatus for driving a motor (including the inverter controlling apparatus for driving a motor described in Japanese Patent Laid-Open Application No. H9-266674), the motor can be driven by the electrical energy accumulated in a condenser having a high capacitance of more than 1000 uF under a loading condition within a driving range. Since, however, the small inductance reactor and the small capacitance condenser are used in the present invention and an electrical energy accumulated in the small capacitance condenser is small, a magnetic energy of the reactor should be used to maintain the operation of the motor even in case the electrical energy is not sufficient. Consequently, a trade-off relation exits between a driving characteristic of the motor and an electrical characteristic of the AC power source.

Accordingly, if the motor has a sufficient maximum load endurance, the electrical characteristic of the AC power source can be improved by suppressing an excessive voltage correction.

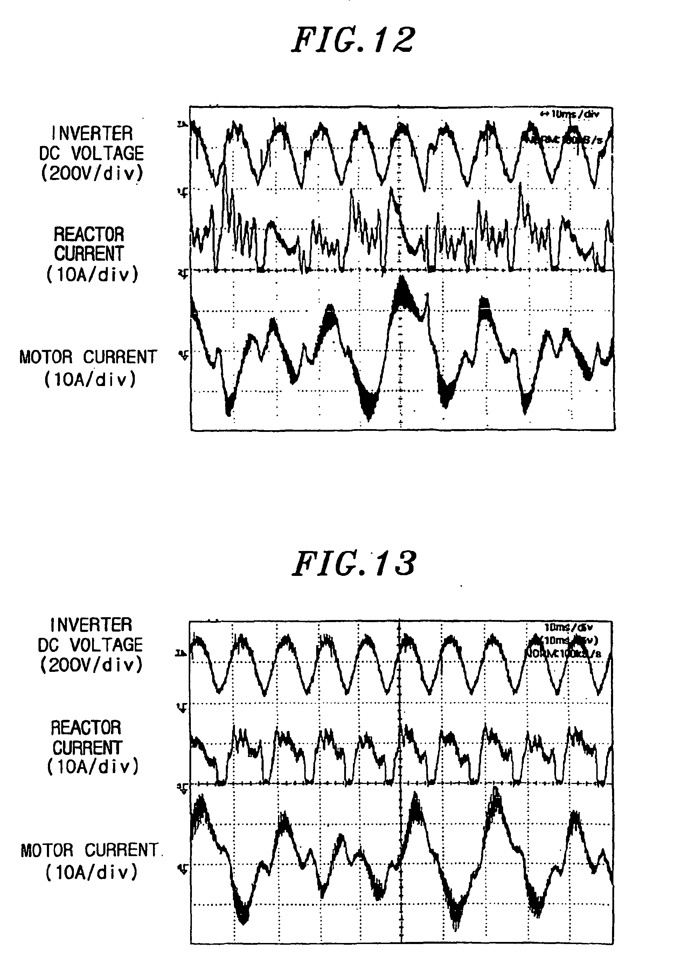

Herein, the results of operating the inverter controlling apparatus for driving a motor in accordance with the present invention are shown in Figs. 12 and 13. Fig. 12 shows the result when neither the upper limit nor the lower limit of the PN correcting coefficient $k_{pn}$ is set. Fig. 13 shows the result when both the upper limit and the lower limit of the PN correcting coefficient $k_{pn}$ are set. Comparing a reactor current waveform (current after passing the diode bridge) of Fig. 12 with that of Fig. 13, the effect of limiting the PN correcting coefficient is outstanding.

The results shown in Fig. 12 and 13 was obtained under a condition where an inductance of a small inductance reactor is 2 mH; a capacitance of a small capacitance condenser, 25 uF; an output of an AC power source, 220 V (50 Hz); an inverter driving frequency, 57 Hz (wherein a pole number of the motor is two, so that the inverter driving frequency is equal to a motor speed indicating value); and an inverter carrier frequency, 5 kHz.

In accordance with the aforementioned method, since the PN voltage correcting coefficient $k_{pn}$ has at least the predetermined upper and lower limits, a variation of the AC power source current is suppressed, thereby improving a power factor of the AC power source and suppressing a harmonic frequency component of the AC power source current.

(Embodiment 5)

Hereinafter, there will be described on a method of setting an inverter driving frequency in accordance with the present invention.

The inverter controlling apparatus for driving a motor employs in accordance with the present invention the small capacitance condenser, so that the inverter DC voltage pulsates in a large scale with a frequency two times higher than an AC power source frequency $f_s$ as shown in Figs. 12 and 13.

Accordingly, at the inverter driving frequency $f_1$ which is an even multiple of the AC power source frequency $f_s$, the inverter DC voltage is synchronized with the pulsating frequency (frequency two times higher than the AC power source frequency $f_s$) and a resonance therebetween occurs.

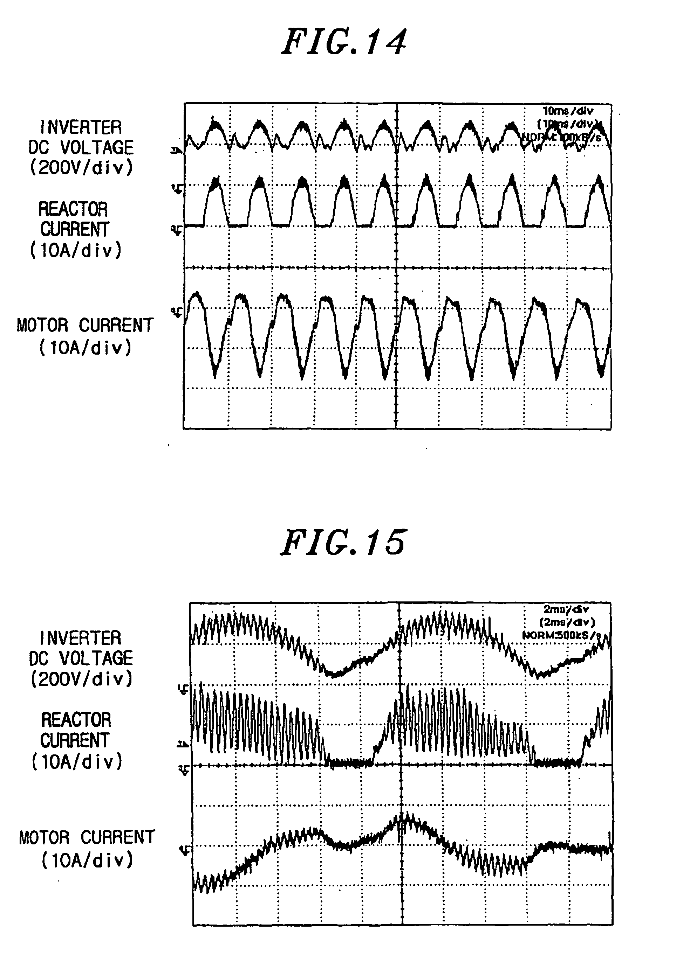

Fig. 14 shows a result of operating the inverter controlling apparatus of the present invention, when the inverter driving frequency $f_1$ becomes two times of the AC power source frequency $f_s$. As shown in Fig. 14, the resonance effect occurs in such a way that the inverter DC voltage is synchronized with the pulsating frequency, and it is found that a negative DC component is overlapped with the motor current.

Accordingly, a brake torque occurs in the motor, resulting in a reduction of an output torque or an increase of motor loss.

The results shown in Fig. 14 was obtained under a condition where an inductance of a small inductance reactor is 0.5 mH; a capacitance of the small capacitance condenser, 10 uF; an output of an AC power source, 220 V (50 Hz); an inverter driving frequency, 100 Hz (wherein a pole number of the motor is two, so that the inverter driving frequency is equal to a motor speed indicating value); and an inverter carrier frequency, 5 kHz. In setting the inverter driving frequency $f_1$, it should be avoided to fix the inverter driving frequency $f_1$, which is given by

$$f_1 = 2nf_s \pm \Delta f_d \qquad\qquad \text{Eq. 9}$$

where $n$ is an integer, $\Delta f_d$ is a predetermined frequency width, and the frequency width $\Delta f_d$ is set such that it is not affected by the above-described resonance effect.

Further, if the inverter driving frequency $f_1$ exceeds the resonance frequency obtained by employing Eq. 9, it is avoided that the inverter driving frequency $f_1$ is fixed to a resonance frequency by changing the inverter driving

frequency $f_1$ shortly in a state of accelerating or decelerating thereof.

Furthermore, it is not necessary to set the frequency width $\Delta f_d$ to a certain value depending on the operational environment (for example, in a state of light load). In this case, the frequency width $\Delta f_d$ is preferably set to be zero.

In accordance with the aforementioned method, by avoiding the resonance between the inverter frequency and the AC power source frequency, the motor can be operated stably in a state of high speed and light load.

(Embodiment 6)

There will now be described a method of determining specification of the small capacitance condenser and the small inductance rector in accordance with the present invention.

In the inverter controlling apparatus for driving a motor in accordance with the present invention, a specification of the small inductance reactor and the small capacitance condenser is determined in such a way that a resonance frequency $f_{LC}$ (LC resonance frequency) of the small inductance reactor and the small capacitance condenser becomes greater than 40 times the AC power source frequency $f_s$ in order to clear values of the IEC specification by suppressing a harmonic frequency component of the AC power source current.

Herein, given that the capacity of the small capacitance condenser is C [F], the inductance of the small inductance reactor is L [H], the LC resonance frequency $f_{LC}$ is presented by Eq. 10.

$$f_{LC} = \frac{1}{2\pi\sqrt{LC}} \qquad\qquad \text{Eq. 10}$$

In other words, a specification of the small capacitance condenser and a small inductance reactor is determined to satisfy $f_{LC} > 40* f_s$ (since harmonic frequency components of the AC power source current of up to 40th order are specified in the IEC specification).

As described above, by determining the specification of the small capacitance condenser and the small inductance reactor, the harmonic component of the AC power source current is suppressed, thereby clearing the values of the IEC specification.

Next, the determination of the capacitance of the small capacitance condenser will be described.

When the inverter is stopped, since the small capacitance condenser absorbs a revival energy (energy accumulated as an inductance component of the motor until it is stopped) and the DC voltage of the inverter rises, the capacitance of the small capacitance condenser is determined in such a way that a maximum value of the DC voltage at that time is smaller than an endurance voltage of each driving device and, consequently, a peripheral circuit can be prevented from being destroyed.

Further, the inductance value of the small capacitance reactor can be automatically by the method described above.

(Embodiment 7)

A method of determining the inverter carrier frequency will now be described.

In the inverter controlling apparatus for driving a motor in accordance with the present invention, as described in detail in embodiment 2, since the electrical energy accumulated in the small capacitance condenser is small, a magnetic energy of the small inductance reactor should be used to maintain the operation of the motor even in case the electrical energy is not sufficient. Consequently, a waveform of the reactor current (current after passing the diode bridge, which is approximately equal to an absolute value of the AC power source current) is influenced by the inverter carrier frequency.

Accordingly, in the inverter controlling apparatus for driving a motor in accordance with the present invention, the carrier frequency of the inverter is set to satisfy a predetermined power factor the AC power source.

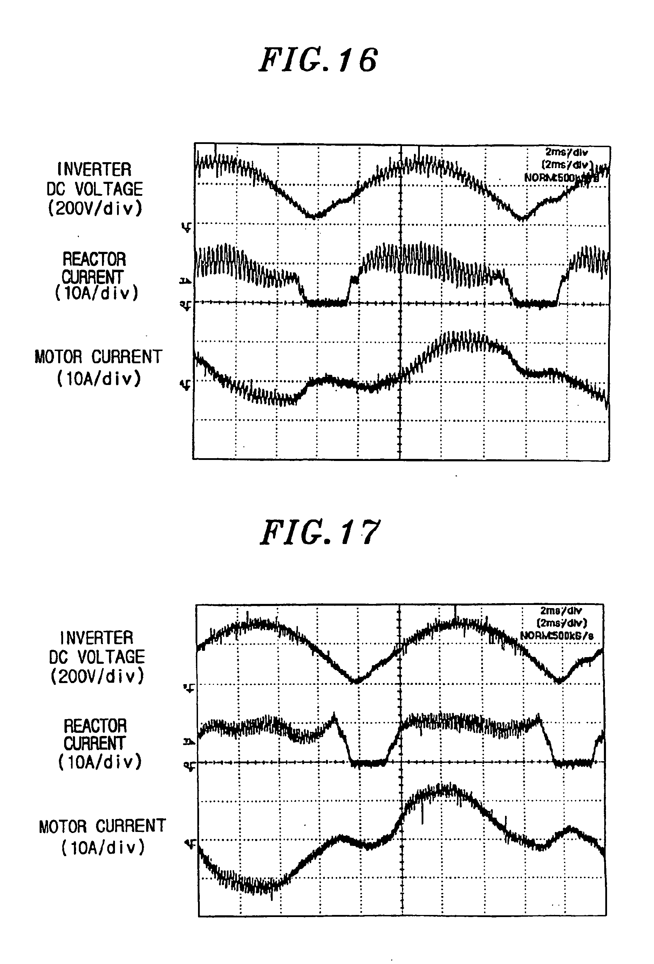

The results of operating the inverter controlling apparatus for driving a motor in accordance with the present invention are shown in Figs. 15, 16 and 17. Fig. 15 shows the result in case of the carrier frequency of 3.3 kHz, Fig. 16 shows the result in case of the carrier frequency of 5 kHz and Fig. 17 shows the result for the carrier frequency of 7.5 kHz. Comparing the reactor current waveforms thereof, it can be found that the reactor current (or the AC power source current) is highly dependent on the carrier frequency.

Further, a power factor of each AC power source measured by a digital power meter is 0.878 when the carrier frequency is 3.3 kHz as shown in Fig. 15, 0.956 when the carrier frequency is 5 kHz as shown in Fig. 16, and 0.962 when the carrier frequency is 7.5 kHz as shown in Fig. 17.

The results shown in Figs. 15 to 17 were obtained by employing a specification where an inductance of a small inductance reactor is 0.5 mH; a capacitance of a small capacitance condenser, 10 uF; an output of an AC power source, 220 V (50 Hz); an inverter driving frequency, 57 Hz (wherein a pole number of the motor is two, so that the inverter driving frequency is equal to a motor speed indicating value); and an input power of the AC power source, 900 W.

At this time, in case the predetermined power factor of the AC power source is, for example, 0.9, the carrier frequency may be set to a value ranging from 3.3 kHz to 5 kHz. Finally, the carrier frequency is determined to a smallest value thereof, while maintaining the predetermined power factor of the AC power source (0.9 in this case).

In this way, the predetermined power factor of the AC power source can be maintained and the inverter loss can be minimized by setting the carrier frequency to an allowable minimum value.

In accordance with the present invention, by reducing a variation of the motor current, the inverter controlling apparatus for driving a motor can be implemented in low cost to have a small size, light weight and, consequently, can be applied to a motor using various small capacity reactors and condensers.

**Claims**

1. An inverter controlling apparatus for driving a motor, including
   a rectifying circuit having an AC electrical source (1) as an input and including a diode bridge (2);
   an inverter (3) for converting from a DC electric power to an AC electric power;
   a voltage detecting means (9) for detecting a DC voltage of the inverter (3); and
   a motor (4);
   a small capacitance condenser (6) for absorbing a revival energy of the motor (4) between base lines of the inverter (3);
   **characterized in that** the rectifying circuit further includes:

   a small inductance reactor (5) connected to the DC output or the AC input of the diode bridge (2);
   a speed indicating value correcting means (13) for making a corrected speed indicating value ($\omega^*_h$) by overlapping a speed component which varies periodically based on a speed indicating value supplied from an outside thereof;
   a motor voltage indicator making means (8) for making a motor voltage indicating value of the motor (4), based on the corrected speed indicating value;
   a voltage correcting means (10) for obtaining a ratio between a pre-determined DC voltage reference value of the motor (4) and a detected DC voltage value of the inverter (3) from the voltage detecting means (9); and
   a motor voltage indicator correcting means (11) for making the corrected motor voltage indicating value of the motor (4) by performing a voltage correction of the motor voltage indicating value by multiplying the motor voltage indicating value from the motor voltage indicator making means (8) with the voltage correction coefficient which is an output value of the voltage correcting means (10).

2. The inverter controlling apparatus for driving the motor of claim 1, wherein the speed indicator correcting means (13) determines the variation width of the corrected speed indicating value based on a speed indicating value of the motor (4).

3. The inverter controlling apparatus for driving the motor of claim 2, wherein the variation width of the corrected speed indicating value ($\omega^*_h$) has, at least, a predetermined upper and lower limit.

4. The inverter controlling apparatus for driving the motor of one of claims 1 to 3, wherein the speed indicator correcting means (13) determines a variation period of a corrected speed indicating value based on the motor speed indicating value.

5. The inverter controlling apparatus for driving the motor of claim 4, wherein the variation period of the corrected speed indicating value has at least a predetermined upper or lower limit.

6. The inverter controlling apparatus for driving the motor of one of claims 1 to 5, wherein the corrected speed indicating value has at least a predetermined upper or lower limit.

7. The inverter controlling apparatus for driving the motor of one of claims 1 to 6, wherein the speed indicator correcting means (13) has a predetermined set value of the speed indicating value, and only if the speed indicating value is larger than the set value of the speed indicating value, the corrected speed indicating value ($\omega^*_h$) is written, and if the speed indicating value is smaller than or equal to the set value of the speed indicating value, the speed indicating value is set to the corrected speed indicating value.

8. The inverter controlling apparatus for driving a motor of one of claims 1 to 7, wherein the speed indicator correcting means writes the corrected speed indicating value only if the speed indicating value becomes fixed, and the speed indicating value is set to the corrected speed indicating value, if the speed indicating value is not fixed.

9. The inverter controlling apparatus for driving the motor of claim 7 or 8, wherein the speed indicator correcting means (13) includes the speed indicator correction converting means having a hysteresis before and after converting the corrected speed indicating value.

10. The inverter controlling apparatus for driving the motor of one of claims 1 to 9, wherein the voltage correcting means (10) calculates the voltage correcting coefficient by dividing a DC voltage reference value with a DC voltage detecting value, and if the DC voltage detecting value is less than or equal to zero, the voltage correcting coefficient is set to be a predetermined maximum value of the voltage correcting coefficient.

11. The inverter controlling apparatus for driving the motor of one of claims 1 to 10, wherein the voltage correcting means (10) has a predetermined upper and/or lower limit on the voltage correcting coefficient.

12. The inverter controlling apparatus for driving the motor of one of claims 1 to 11, wherein an inverter driving frequency is avoided being normally fixed within the frequency range having a predetermined bandwidth with a resonant frequency as a center, the resonant frequency being an even multiple of the AC power source frequency.

13. The inverter controlling apparatus for driving the motor of one of claims 1 to 12, wherein a specification of the small inductance reactor (5) and the small capacitance condenser (6) is determined in such a way that the resonance frequency of the small inductance reactor (5) and the small capacitance condenser (6) becomes greater than 40 times the AC power source frequency.

14. The inverter controlling apparatus for driving the motor of one of claims 1 to 13, wherein the capacitance of the small capacitance condenser (6) is determined so that the rising maximum value of the DC voltage value becomes smaller than an endurance voltage when the inverter (3) is stopped.

15. The inverter controlling apparatus for driving the motor of one of claims 1 to 14, wherein the inverter controlling apparatus being adapted for setting the carrier frequency to an allowable minimum value to thereby maintain the predetermined power factor of the AC power source (1).

16. An air conditioner including the inverter controlling apparatus for driving the motor of one of claims 1 to 15, comprising:

> a compressor,
> a driving motor (4) for driving the compressor;
> a converter device for converting an AC electric power to a DC electric power;
> wherein the DC electric power converted from the AC electric power in the converter apparatus is applied to the driving motor.

**Patentansprüche**

1. Stromrichtersteuervorrichtung zum Ansteuern eines Motors, enthaltend:

> eine Gleichrichtungsschaltung, die eine elektrische Wechselstromquelle (1) als Eingang aufweist und eine Diodenbrücke (2) enthält;
> einen Stromrichter (3) zum Umsetzen von elektrischem Gleichstrom in elektrischen Wechselstrom;
> ein Spannungserfassungsmittel (9) zum Erfassen einer Gleichspannung des Stromrichters (3);
> einen Motor (4); und
> einen Kondensator (6) mit kleiner Kapazität zum Absorbieren einer Erholungsenergie des Motors (4) zwischen Basisleitungen des Stromrichters (3);

> **dadurch gekennzeichnet, dass** die Gleichrichtungsschaltung ferner enthält:

> eine Drosselspule (5) mit kleiner Induktivität, die mit dem Gleichstromausgang oder dem Wechselstromeingang der Diodenbrücke (2) verbunden ist;
> ein Geschwindigkeitsanzeigewert-Korrekturmittel (13) zum Bilden eines korrigierten Geschwindigkeitsanzeige-

wertes ($\omega^*_h$) durch Überlagern einer Geschwindigkeitskomponente, die periodisch variiert, auf der Grundlage eines Geschwindigkeitsanzeigewertes, der von außerhalb desselben zugeführt wird;

ein Motorspannungsindikator-Bildungsmittel (8) zum Bilden eines Motorspannungsanzeigewertes des Motors (4) auf der Grundlage des korrigierten Geschwindigkeitsanzeigewertes;

ein Spannungskorrekturmittel (10) zum Erlangen eines Verhältnisses zwischen einem vorgegebenen Gleichspannungsreferenzwert des Motors (4) und einem erfassten Gleichspannungswert des Stromrichters (3) von dem Spannungserfassungsmittel (9); und

ein Motorspannungsindikator-Korrekturmittel (11) zum Bilden des korrigierten Motorspannungsanzeigewertes des Motors (4) durch Ausführen einer Spannungskorrektur des Motorspannungsanzeigewertes durch Multiplizieren des Motorspannungsanzeigewertes vom Motorspannungsindikator-Bildungsmittel (8) mit dem Spannungskorrekturkoeffizienten, der ein Ausgabewert des Spannungskorrekturmittels (10) ist.

2. Stromrichtersteuervorrichtung zum Ansteuern eines Motors nach Anspruch 1, wobei das Geschwindikeitsindikator-Korrekturmittel (13) die Variationsbreite des korrigierten Geschwindigkeitsanzeigewertes auf der Grundlage eines Geschwindigkeitsanzeigewertes des Motors (4) bestimmt.

3. Stromrichtersteuervorrichtung zum Ansteuern eines Motors nach Anspruch 2, wobei die Variationsbreite des korrigierten Geschwindigkeitsanzeigewertes ($\omega^*_h$) wenigstens eine vorbestimmte obere und untere Grenze aufweist.

4. Stromrichtersteuervorrichtung zum Ansteuern eines Motors nach irgendeinem der Ansprüche 1 bis 3, wobei das Geschwindigkeitsindikator-Korrekturmittel (13) eine Variationsperiode eines korrigierten Geschwindigkeitsanzeigewertes auf der Grundlage des Motorgeschwindigkeitsanzeigewertes bestimmt.

5. Stromrichtersteuervorrichtung zum Ansteuern eines Motors nach Anspruch 4, wobei die Variationsperiode des korrigierten Geschwindigkeitsanzeigewertes wenigstens eine vorgegebene obere oder untere Grenze aufweist.

6. Stromrichtersteuervorrichtung zum Ansteuern eines Motors nach irgendeinem der Ansprüche 1 bis 5, wobei der korrigierte Geschwindigkeitsanzeigewert wenigstens eine vorgegebene obere oder untere Grenze aufweist.

7. Stromrichtersteuervorrichtung zum Ansteuern eines Motors nach irgendeinem der Ansprüche 1 bis 6, wobei das Geschwindigkeitsindikator-Korrekturmittel (13) einen vorgegebenen Einstellwert des Geschwindigkeitsanzeigewertes aufweist, wobei nur dann, wenn der Geschwindigkeitsanzeigewert größer ist als der Einstellwert des Geschwindigkeitsanzeigewertes, der korrigierte Geschwindigkeitsanzeigewert ($\omega^*_h$) geschrieben wird, und dann, wenn der Geschwindigkeitsanzeigewert kleiner oder gleich dem Einstellwert des Geschwindigkeitsanzeigewertes ist, der Geschwindigkeitsanzeigewert auf den korrigierten Geschwindigkeitsanzeigewert gesetzt wird.

8. Stromrichtersteuervorrichtung zum Ansteuern eines Motors nach irgendeinem der Ansprüche 1 bis 7, wobei das Geschwindigkeitsindikator-Korrekturmittel den korrigierten Geschwindigkeitsanzeigewert nur dann schreibt, wenn der Geschwindigkeitsanzeigewert fixiert wird, und der Geschwindigkeitsanzeigewert auf den korrigierten Geschwindigkeitsanzeigewert gesetzt wird, wenn der Geschwindigkeitsanzeigewert nicht fixiert ist.

9. Stromrichtersteuervorrichtung zum Ansteuern eines Motors nach Anspruch 7 oder 8, wobei das Geschwindigkeitsindikator-Korrekturmittel (13) das Geschwindigkeitsindikatorkorrektur-Konvertierungsmittel enthält, das eine Hysterese vor und nach dem Konvertieren des korrigierten Geschwindigkeitsanzeigewertes aufweist.

10. Stromrichtersteuervorrichtung zum Ansteuern eines Motors nach irgendeinem der Ansprüche 1 bis 9, wobei das Spannungskorrekturmittel (10) den Spannungskorrekturkoeffizienten berechnet, indem es einen Gleichspannungsreferenzwert durch einen Gleichspannungserfassungswert dividiert, wobei dann, wenn der Gleichspannungserfassungswert kleiner oder gleich Null ist, der Spannungskorrekturkoeffizient so gesetzt wird, dass er ein vorgegebener Maximalwert des Spannungskorrekturkoeffizienten ist.

11. Stromrichtersteuervorrichtung zum Ansteuern eines Motors nach irgendeinem der Ansprüche 1 bis 10, wobei das Spannungskorrekturmittel (10) eine vorgegebene obere und/oder untere Grenze für den Spannungskorrekturkoeffizienten aufweist.

12. Stromrichtersteuervorrichtung zum Ansteuern eines Motors nach irgendeinem der Ansprüche 1 bis 11, wobei eine Stromrichteransteuerfrequenz vermieden wird, die normalerweise innerhalb des Frequenzbereichs fixiert ist, der eine vorgegebene Bandbreite mit einer Resonanzfrequenz als Zentrum aufweist, wobei die Resonanzfrequenz ein geradzahliges Vielfaches der Wechselstromquellenfrequenz ist.

13. Stromrichtersteuervorrichtung zum Ansteuern eines Motors nach irgendeinem der Ansprüche 1 bis 12, wobei eine Spezifikation der Drosselspule (5) mit kleiner Induktivität und des Kondensators (6) mit kleiner Kapazität derart bestimmt ist, dass die Resonanzfrequenz der Drosselspule (5) mit kleiner Induktivität und des Kondensators (6) mit kleiner Kapazität größer als das 40-fache der Wechselstromquellenfrequenz wird.

14. Stromrichtersteuervorrichtung zum Ansteuern eines Motors nach irgendeinem der Ansprüche 1 bis 13, wobei die Kapazität des Kondensators (6) mit kleiner Kapazität so bestimmt ist, dass der ansteigende Maximalwert des Gleichspannungswertes kleiner wird als eine Dauerspannung, wenn der Stromrichter (3) gestoppt ist.

15. Stromrichtersteuervorrichtung zum Ansteuern eines Motors nach irgendeinem der Ansprüche 1 bis 14, wobei die Stromrichtersteuervorrichtung dafür ausgelegt ist, die Trägerfrequenz auf einen zulässigen Minimalwert einzustellen, um somit den vorgegebenen Leistungsfaktor der Wechselstromquelle (1) aufrecht zu erhalten.

16. Klimagerät, das eine Stromrichtersteuervorrichtung zum Ansteuern eines Motors nach irgendeinem der Ansprüche 1 bis 15 enthält, umfassend:

einen Kompressor,
einen Antriebsmotor (4) zum Antreiben des Kompressors;
eine Umrichtervorrichtung zum Umrichten eines elektrischen Wechselstroms in einen elektrischen Gleichstrom;
wobei der elektrische Gleichstrom, der in der Umrichtervorrichtung aus dem elektrischen Wechselstrom umgerichtet wird, dem Antriebsmotor zugeführt wird.

**Revendications**

1. Appareil de commande d'onduleur destiné à entraîner un moteur, comportant
un circuit de redressement ayant une source électrique (1) de courant alternatif, comme entrée et comportant un pont de diode (2) ;
un onduleur (3) destiné à convertir une énergie électrique à courant continu en une énergie électrique à courant alternatif ;
un moyen (9) de détection de tension destiné à détecter une tension continue de l'onduleur (3) ; et
un moteur (4) ;
un condenseur (6) destiné à absorber une énergie de relance du moteur (4) entre des lignes de base de l'onduleur (3) ;
**caractérisé en ce que** le circuit de redressement comporte en outre :

une bobine de réactance (5) reliée à l'entrée du courant continu ou à l'entrée du courant alternatif du pont de diode (2) ;
un moyen (13) de correction de valeur indiquant une vitesse destiné à établir une valeur ($W^*_h$) indiquant une vitesse corrigée en superposant une composante de vitesse qui varie périodiquement sur la base d'une valeur indiquant une vitesse fournie de l'extérieur de celle-ci ;
un moyen (8) d'établissement d'indicateur de tension de moteur destiné à établir un valeur indiquant une tension d'un moteur du moteur (4), sur la base de la valeur indiquant une vitesse corrigée ;
un moyen (10) de correction de tension pour obtenir un rapport entre une valeur de référence de tension continue prédéterminée du moteur (4) et une valeur de tension continue détectée de l'onduleur (3) à partir du moyen (9) de détection de tension ; et
un moyen (11) de correction d'indicateur de tension du moteur destiné à établir la valeur indiquant une tension corrigée d'un moteur du moteur (4) en effectuant une correction de tension de la valeur indiquant une tension du moteur en multipliant la valeur indiquant une tension du moteur du moyen (8) d'établissement d'indicateur de tension du moteur par le coefficient de correction de tension qui est une valeur de sortie du moyen (10) de correction de tension.

2. Appareil de commande d'onduleur destiné à entraîner le moteur de la revendication 1, dans lequel le moyen (13) de correction d'indicateur de vitesse détermine la largeur de variation de la valeur indiquant une vitesse corrigée sur la base d'une valeur indiquant une vitesse du moteur (4).

3. Appareil de commande d'onduleur destiné à entraîner le moteur de la revendication 2, dans lequel la largeur de variation de la valeur (W*$_h$) indiquant une vitesse corrigée a, au moins, une limite supérieure et inférieure prédéterminée.

4. Appareil de commande d'onduleur destiné à entraîner le moteur de l'une des revendications 1 à 3, dans lequel le moyen (13) de correction d'indicateur de vitesse détermine une période de variation d'une valeur indiquant une vitesse corrigée sur la base de la valeur indiquant une vitesse du moteur.

5. Appareil de commande d'onduleur destiné à entraîner le moteur de la revendication 4, dans lequel la période de variation de la valeur indiquant une vitesse corrigée a au moins une limite supérieure ou inférieure prédéterminée.

6. Appareil de commande d'onduleur destiné à entraîner le moteur de l'une des revendications 1 à 5, dans lequel la valeur indiquant une vitesse corrigée a au moins une limite supérieure ou inférieure prédéterminée

7. Appareil de commande d'onduleur destiné à entraîner le moteur de l'une des revendications 1 à 6, dans lequel le moyen (13) de correction d'indicateur de vitesse a une valeur de consigne prédéterminée de la valeur indiquant une vitesse, et seulement si la valeur indiquant une vitesse est plus importante que la valeur de consigne de la valeur indiquant une vitesse, la valeur (W*$_h$) indiquant une vitesse corrigée est écrite, et si la valeur indiquant une vitesse est inférieure ou égale à la valeur de consigne de la valeur indiquant une vitesse, la valeur indiquant une vitesse est réglée à la valeur indiquant une vitesse corrigée.

8. Appareil de commande d'onduleur destiné à entraîner un moteur de l'une des revendications 1 à 7, dans lequel le moyen de correction de l'indicateur de vitesse écrit la valeur indiquant une vitesse corrigée seulement si la valeur indiquant une vitesse devient fixe, et la valeur indiquant une vitesse est réglée à la valeur indiquant une vitesse corrigée, si la valeur indiquant une vitesse n'est pas fixe.

9. Appareil de commande d'onduleur destiné à entraîner le moteur de la revendication 7 ou 8, dans lequel le moyen (13) de correction de l'indicateur de vitesse comporte le moyen de conversion de la correction de l'indicateur de vitesse ayant une hystérésis avant et après la conversion la valeur indiquant une vitesse corrigée.

10. Appareil de commande d'onduleur destiné à entraîner le moteur de l'une des revendications 1 à 9, dans lequel le moyen (10) de correction de tension calcule le coefficient de correction de tension en divisant une valeur de référence de tension continue par une valeur de détection de tension continue, et si valeur de détection de tension continue est inférieure ou égale à zéro, le coefficient de correction de tension est réglé de manière à être une valeur maximale prédéterminée du coefficient de correction de tension.

11. Appareil de commande d'onduleur destiné à entraîner le moteur de l'une des revendications 1 à 10, dans lequel le moyen (10) de correction de tension a une limite inférieure et/ou supérieure prédéterminée sur le coefficient de correction de tension.

12. Appareil de commande d'onduleur destiné à entraîner le moteur de l'une des revendications 1 à 11, dans lequel une fréquence d'entraînement de l'onduleur ne doit pas être normalement fixée dans la plage de fréquence ayant une largeur de bande prédéterminée avec une fréquence de résonance en tant que centre, la fréquence de résonance étant un multiple pair de la fréquence de la source d'alimentation en courant alternatif.

13. Appareil de commande d'onduleur destiné à entraîner le moteur de l'une des revendications 1 à 12, dans lequel une spécification de la bobine de réactance (5) de faible inductance et du condensateur (6) de faible capacité est déterminée de telle manière que la fréquence de résonance de la bobine de réactance (5) de faible inductance et du condensateur (6) de faible capacité devienne supérieure à 40 fois la fréquence de la source d'alimentation en courant alternatif.

14. Appareil de commande d'onduleur destiné à entraîner le moteur de l'une des revendications 1 à 13, dans lequel la capacitance du condensateur (6) de faible capacité est déterminée de sorte que la valeur maximale de l'augmentation la valeur de la tension continue devienne inférieure à une tension d'endurance lorsque l'onduleur (3) est arrêté.

15. Appareil de commande d'onduleur destiné à entraîner le moteur de l'une des revendications 1 à 14, dans lequel l'appareil de commande d'onduleur étant adapté pour régler la fréquence porteuse à une valeur minimale autorisée pour maintenir ainsi le facteur de puissance prédéterminé de la source d'alimentation (1) en courant alternatif.

**16.** Climatiseur comportant l'appareil de commande d'onduleur pour entraîner le moteur de l'une des revendications 1 à 15, comprenant:

un compresseur,
un moteur d'entraînement (4) pour entraîner le compresseur ;
un dispositif de conversion destiné à convertir une énergie électrique à courant alternatif en une énergie électrique à courant continu ;
où l'énergie électrique à courant continu convertie à partir de l'énergie électrique à courant alternatif dans l'appareil convertisseur est appliquée au moteur d'entraînement.

## FIG.1

## FIG.2

*FIG.3*

CORRECTED SPEED INDICATING VALUE
VARIATION WIDTH AND VARIATION
FREQUENCY

———— VARIATION WIDTH
– – – – VARIATION FREQUENCY

$f_a$

$\Delta f$

SPEED INDICATING VALUE

*FIG.4*

CORRECTED SPEED INDICATING VALUE
VARIATION WIDTH AND VARIATION
FREQUENCY

$f_a$

$\Delta f$

SPEED INDICATING VALUE

## FIG.5

CORRECTED SPEED INDICATING VALUE

UPPER LIMIT

LOWER LIMIT

TIME

## FIG.6

SPEED INDICATING VALUE

$\omega_1$

$\omega_2$

$\omega_h^*$ OPERATION

$\omega_h^*$ OPERATION

TIME

$\omega_2^* = \omega^*$

$\omega_h^* = \omega^*$

$\omega_h^* = \omega^*$

## FIG. 7

TAGEET CORRECTED SPEED
INDICATING VALUE
AFTER TRANSITION

CORRECTED SPEED
INDICATING VALUE
TRANSITION END POINT

CORRECTED SPEED
INDICATING VALUE
TRANSITION
START POINT

CORRECTED SPEED
INDICATING VALUE
TRANSITION TIME

CORRECTED SPEED INDICATING VALUE

TIME

## FIG. 8

PN VOLTAGE CORRECTING COEFFICIENT

$k_{pn0}$

0

$V_{pn0}$

DC VOLTAGE DETECTION VALUE [V]

# FIG.9

## FIG.10

INVERTER
DC VOLTAGE
(200V/div)

AC POWER
SOURCE CURRENT
(10A/div)

MOTOR CURRENT
(10A/div)

↔50ms/div

## FIG.11

INVERTER
DC VOLTAGE
(200V/div)

AC POWER
SOURCE CURRENT
(10A/div)

MOTOR CURRENT
(10A/div)

↔50ms/div

## FIG.12

INVERTER
DC VOLTAGE
(200V/div)

REACTOR
CURRENT
(10A/div)

MOTOR CURRENT
(10A/div)

## FIG.13

INVERTER
DC VOLTAGE
(200V/div)

REACTOR
CURRENT
(10A/div)

MOTOR CURRENT.
(10A/div)

## FIG.14

INVERTER
DC VOLTAGE
(200V/div)

REACTOR
CURRENT
(10A/div)

MOTOR CURRENT
(10A/div)

## FIG.15

INVERTER
DC VOLTAGE
(200V/div)

REACTOR
CURRENT
(10A/div)

MOTOR CURRENT
(10A/div)

## FIG.16

INVERTER
DC VOLTAGE
(200V/div)

REACTOR
CURRENT
(10A/div)

MOTOR CURRENT
(10A/div)

## FIG.17

INVERTER
DC VOLTAGE
(200V/div)

REACTOR
CURRENT
(10A/div)

MOTOR CURRENT
(10A/div)

# FIG.18

## FIG.19

## FIG.20

# FIG.21

**EP 1 521 358 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H9266674 A
- EP 1152521 A1
- US 6313602 B1

**Non-patent literature cited in the description**

- *Inverter drive handbook,* 661-711